# EUROPEAN PATENT APPLICATION

(11) **EP 3 721 720 A1**
(43) Date of publication of application: **14.10.2020**
(21) Application number: 17933863.7
(22) Date of filing: 05.12.2017
(51) Int. Cl.: A23L 7/139, A23L 7/152, A23L 5/10, A23L 7/10

(54) **ROASTED WHOLE GRAIN CEREAL PREPARATION METHOD AND CEREAL IN WHICH ROASTED WHOLE GRAINS ARE MIXED**

(71) Applicant: Kim, Jong Hi, Seoul 06359 (KR)
(72) Inventor: Kim, Jong Hi, Seoul 06359 (KR)
(74) Representative: Jacobi, Markus Alexander
(86) International application number: PCT/KR2017/014147
(87) International publication number: WO 2019/112078

(57) **Abstract**

Disclosed are a method for manufacturing roasted whole grain cereal, in which whole grains are roasted in an unpeeled state; and roasted whole grain cereal manufactured by the above method. By steaming and drying whole grain such as brown rice, brown glutinous rice, black rice, whole adlay, whole sorghum, whole wheat, corn, beans, etc. and then aging the same in a loess room emitting far-infrared rays, and roasting the same without any other additive, such that a carbonized layer is formed at the outermost portion of the whole grain, roasted whole grain cereal containing nutrients in the fiber in a form absorbable by the human body, can be prepared.

## Description

### [Field of Invention]

The present invention relates to a method for production of roasted whole grain cereal and roasted whole grain cereal produced by the same. More particularly, the present invention relates to "Manna" including nutrients in fibers, which are in a form absorbable by the human body, and a method for manufacturing the same, which includes steaming and drying whole grain such as brown rice, brown glutinous rice, black rice, whole adlay, whole wheat, corn, beans, etc., and then stir-frying the same to produce potassium carbonate from fibrous materials contained in the bran of the whole grain.

### [Background of Invention]

Since it is widely known that whole grains including bran or husks such as brown rice, whole wheat, etc., are beneficial to health, interest in and demand for whole grains are increasing day by day.

As a result of actual clinical trials, it is often reported that people consuming more whole grains than refined grains have a better intestinal microbiome, improved specific immune response, and reduced risk of heart disease, diabetes and cancer.

In addition, it is found that consumption of whole grains increases the number of memory T cells and increases the number of *Lachnospira,* a bacterium generating monoenoic fatty acids, which change pH of the stool to be beneficial to the human body.

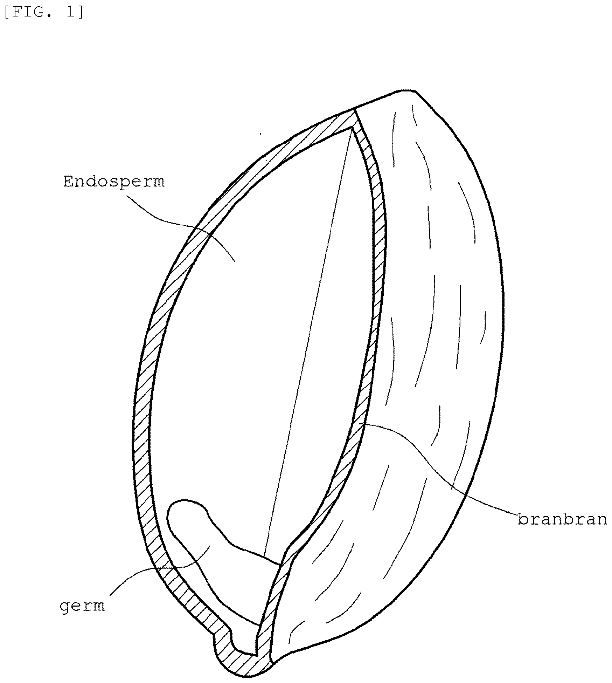

As shown in FIG. 1, the nutritional composition of the brown rice composed of endosperm, germ and bran is shown in the following table.

**[TABLE 1]**

| | Carb./g | Protein/g | Fat/g | Fiber/g | Iron (% daily req. ) |
|---|---|---|---|---|---|
| Bran | 63 | 16 | 3 | 43 | 59 |
| Endosperm | 79 | 7 | 0 | 4 | 7 |
| Germ | 52 | 23 | 10 | 14 | 35 |

As shown in Table 1, 100 g of each of the bran, endosperm and germ was subjected to compositional analysis. As a result of the analysis, it could be found that the bran contains the most fiber and minerals such as iron.

However, in the case of foods manufactured using whole grain containing bran, the human body hardly digests fibers contained in the whole grain and cannot absorb a variety of nutrients contained in the bran, instead, directly excreting the nutrients in feces. Further, there is a problem of difficult digestion.

Conventionally, cereals have been produced using grains without bran which contain nutrients very beneficial to the human body. Therefore, such cereals entail a problem in that various beneficial nutrients contained in the bran of the grains could not be uniformly or evenly ingested. Although there is existing cereal manufactured using whole grain, a fibrous material contained in the bran of the whole grain has a crystalline molecular structure that is poorly assimilated by the human digestive organs, thereby causing a problem of poor digestion.

### [Disclosure of Invention]

### [Technical Problem to be Solved]

The present invention has been proposed to solve the above-mentioned problems, and an object of the present invention is to provide cereal mixed with stir-fried (or roasted) whole grain and a method for production thereof by processing the fiber contained in the bran of the whole grain into an easily digestible form.

More particularly, an object of the present invention is to propose cereal mixed with roasted whole grain, manufactured by, after drying and aging processes, forming a carbonized layer having a predetermined thickness on the outermost portion of the whole grain to produce potassium carbonate whereby the fiber contained in the bran of the whole grain can be easily digested by the human digestive organs, as well as a process of manufacturing the cereal.

In addition, another object of the present invention is to propose cereal mixed with roasted whole grain, manufactured by preparing the cereal without using condiments or seasonings, oils or sugars, whereby the cereal is completely harmless to the human body and minerals and other nutrients contained in the bran of the whole grain can be digested by the human body, as well as a process of manufacturing the cereal.

### [Technical Solution]

In order to solve the above-mentioned problems, among methods for production of roasted whole grain cereals according to the present invention, a process of manufacturing roasted whole grain cereal using brown rice, brown glutinous rice, black rice or a grain mixture thereof may include: soaking brown rice, brown glutinous rice, black rice or a grain mixture thereof in a whole grain state in salt water so as to reach a water content of 25 to 35%; after soaking, germinating the grain to generate germ in a size of 0.2 to 0.5 mm; heating the germinated grain with steam for 1 to 3 hours and cooking the same; drying the cooked whole grain in a dryer at a temperature of 28 to 32°C for 7 to 8 hours; dividing the whole grain into kernels, and screening and removing the crushed whole grain; aging the dried grain in a loess room; roasting the aged grain at a temperature of 200 to 220 °C for 10 to 15 minutes without oil to form a carbonized layer having a predetermined thickness on the outermost portion of the whole grain; and storing the roasted grain in a sealed container.

Among methods for production of roasted whole grain cereals according to the present invention, a process of manufacturing roasted whole grain cereal using whole barley, whole wheat or a grain mixture thereof may include: soaking whole barley, whole wheat or a mixture thereof in a whole grain state for 2 to 3 days; after soaking, germinating the grain to generate germ in a size of 0.2 to 0.5 mm; heating the germinated grain with steam for 1 to 3 hours and cooking the same; drying the cooked whole grain in a dryer at a temperature of 28 to 32 °C for 7 to 8 hours; aging the dried grain in a loess room; roasting the aged grain at a temperature of 200 to 220 °C for 10 to 15 minutes without oil to form a carbonized layer on the outermost portion of the whole grain; and storing the roasted grain in a sealed container.

At this time, a process of spraying salt water onto the aged grain during aging and drying the same may be repeated 3 to 5 times.

Further, the carbonized layer is formed in a predetermined thickness on the surface of the grain to produce potassium carbonate in the carbonized layer formation step.

Further, the cooking step and the drying step may be repeated 3 to 5 times.

Also, in the case of using a popping machine, a frying pot or a pan as a roasting device in the carbonized layer formation step, the grain obtained after the aging step may be frozen, dried and then fried.

Further, among methods for production of roasted whole grain cereals according to the present invention, a process of manufacturing roasted whole grain cereal using soybean, black bean or a grain mixture thereof may include: soaking soybean, black bean or a mixture thereof in a whole grain state for 2 to 3 days so as to reach a water content of 25 to 35%; after soaking, heating the grain with steam for 40 to 50 minutes, cooking and then steaming the same thoroughly for 5 to 15 minutes; freezing the cooked whole grain in a freezer; after thawing and drying the frozen grain, aging the same in a loess room for 2 to 3 days; roasting the dried and aged grain without oil to form a carbonized layer on the outermost portion of the whole grain; and storing the roasted grain in a sealed container.

Further, among methods for production of roasted whole grain cereals according to the present invention, a process of manufacturing cereal using corn may include: soaking dried corn for 1 day; after soaking, cooking the soaked corn in a pressure cooker (autoclave) or a steamer for 1 hour; drying and aging the cooked corn in a loess room; aging the dried corn in a freezer for 2 to 3 days; roasting the frozen and aged corn with strong heat and then weak heat to form a carbonized layer on the outermost portion of the corn; and storing the roasted corn in a sealed container.

At this time, after the cooking step, the flame is turned off, followed by steaming the cooked corn thoroughly for 6 to 8 hours.

### [Effect of Invention]

As described above, according to the present invention, since a variety of whole grains is roasted and a carbonized layer is formed at the outmost portion of whole grain, potassium carbonate produced in the carbonized layer can convert nutrients in the fiber into a form absorbable by the human body. Accordingly, it is possible to provide "Manna" capable of offering nutrients contained in the bran of the whole grain.

In particular, different grains may be provided under different and optimized processing conditions, thereby retaining unique tastes and flavors of the grains. In addition, the grains can be chewed for a long time, thereby offering indirect help to brain health.

Moreover, a small amount of potassium carbonate produced in the roasting step of grains may dissolve waste and fat of the body to thus reduce blood pressure, heart disease and obesity. Further, pores generated during carbonization of the bran in the roasting step may adsorb toxic substances during digestion, thereby making the stomach comfortable and cleaning the blood while warming the body.

In addition, since artificial seasonings, condiments, grease or sugar are not used at all, one can not only experience the natural taste of whole grains but there are also effects of being completely harmless to the human body.

### [Brief Description of Drawings]

FIG. 1 is a partially cross-sectional view illustrating the structure of brown rice.
FIG. 2 is a flowchart illustrating a method for manufacturing Manna using brown rice, brown glutinous rice and/or black rice.
FIG. 3 illustrates a soaking step.
FIG. 4 illustrates a cooking step.
FIG. 5 illustrates an aging or drying step in a loess room.
FIG. 6 illustrates a carbonized layer forming step.
FIG. 7 illustrates a step of weighing and mixing a variety of roasted whole grains.
FIG. 8 illustrates a process of manufacturing Manna using soybeans.
FIG. 9 illustrates a process of manufacturing Manna using whole barley and whole wheat.

IG. 10 illustrates a process of manufacturing Manna using corn.

### [Detailed Description of Concrete Embodiments of Invention]

Hereinafter, the present invention will be described in detail with reference to preferred embodiments of the present invention and the accompanying drawings, wherein the same reference numerals refer to the same or similar elements.

It is to be understood that, when an element is referred to as "comprising" another element in the detailed description of the invention or in the appended claims, it is not construed as being limited to only that element but may encompass further elements.

The present invention relates to a method for production of cereals using whole grains such as brown rice, black rice, whole adlay, whole oat, whole wheat, corn, soybeans, etc. under optimal processing conditions.

Hereinafter, the cereal manufactured by the production method of the present invention is referred to as "Manna". It is well known that Manna is recorded in the Bible as food given from the sky. However, in the present invention, Manna is intended to refer to food prepared using natural grains without any additive such as artificial seasonings or the like.

Hereinafter, the Manna production method using whole grains will be described in detail.

### How to make Manna using brown rice, brown rice, black rice

Brown glutinous rice may prevent adult diseases of persons with poor digestive function, and may also be effective in treating obesity. The brown glutinous rice is rich in inorganic salts and vitamins, and thus is effective for hypertension, diabetes, arteriosclerosis and the like. Black rice is black-colored rice which has antioxidant, anticancer and anti-ulcer effects and contains a watersoluble anthocyanin pigment. Black rice is rich in anthocyanin, while B vitamins, iron, Zinc, selenium and other minerals are contained in 5 times the amount of ordinary rice.

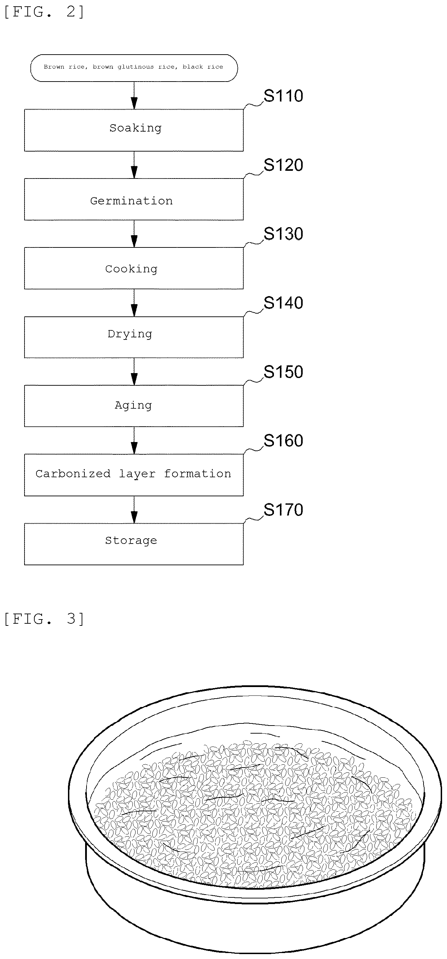

As shown in FIG. 2, the method for manufacturing Manna using brown rice, brown glutinous rice, black rice or a grain mixture thereof may include soaking S110, germination S120, cooking S130, drying S140, aging S150, carbonized layer formation S160 and storage S170.

As shown in FIG. 3, the brown rice, brown glutinous rice, black rice or a grain mixture thereof may be subjected to soaking S110 of soaking the rice in salt water for 12 to 24 hours.

The brown rice, brown glutinous rice, black rice or a grain mixture thereof obtained after the soaking step S110 may absorb a certain amount of water while maintaining the original shape of the grain, thereby reaching a water content of 25 to 35%.

If the water content is less than 25% or more than 35%, germination is not properly performed in the germination step S120 as a following process, so that the water content of brown rice, brown rice glutinous rice or a grain mixture thereof ranges from 25 to 35%.

The soaking step S110 may be performed using hot water so as to reduce the soaking time.

In the soaking step S110, the texture of the brown rice, brown glutinous rice, black rice or a grain mixture thereof may be gradually changed by steam-heating so as to be cooked in a desired state for ingestion. Then, even after undergoing the carbonized layer formation step S160, inner and outer tissues are not greatly damaged while maintaining the original shape of the grain, the crispy texture may be maintained while having good taste, and various nutrients contained in the grain may be directly ingested.

The germination step S120 in which the brown rice, brown glutinous rice, black rice or a grain mixture thereof obtained through the soaking step S110 is put into a germination device wherein the grain is germinated to generate germs at a size of 0.2 to 0.5 mm for 7 to 10 hours. When the size of the germ is less than 0.2 mm, the nutrients contained in the germ are not enriched. If the size of the germ exceeds 0.5 mm, the texture is deteriorated. Therefore, in the germination step S120, the brown rice, brown glutinous rice, black rice or a grain mixture thereof is preferably germinated to generate germs at a size of 0.2 to 0.5 mm.

All grains maximize nutrient levels thereof when germinated, thereby producing new nutrients.

When the brown rice is germinated, that is, upon sprouting, different chemical responses may occur in the brown rice. When the brown rice is germinated, new nutrients are produced and nutrients previously present therein are increased. In addition, substances capable of raising immunity to different bacteria may be produced.

Due to such changes, germinated brown rice may completely digest and absorb the nutrients without causing digestive disturbance.

Further, detoxification substances, immune substances and enzymes of the germinated grains are attracting attention as new materials to treat diverse incurable diseases.

In addition, a large amount of dietary fiber is increased during germination of brown rice. Dietary fiber has a sponge-like tissue to thus exhibit excellent adsorption. Therefore, the dietary fiber may penetrate every portion of the intestine and then absorb and discharge waste matter, cholesterol, heavy metals, pesticides and the like.

When the germinated brown rice is ingested, blood is purified while allowing smooth metabolism, thereby preventing diverse adult diseases such as hypertension, diabetes, obesity, constipation, etc.

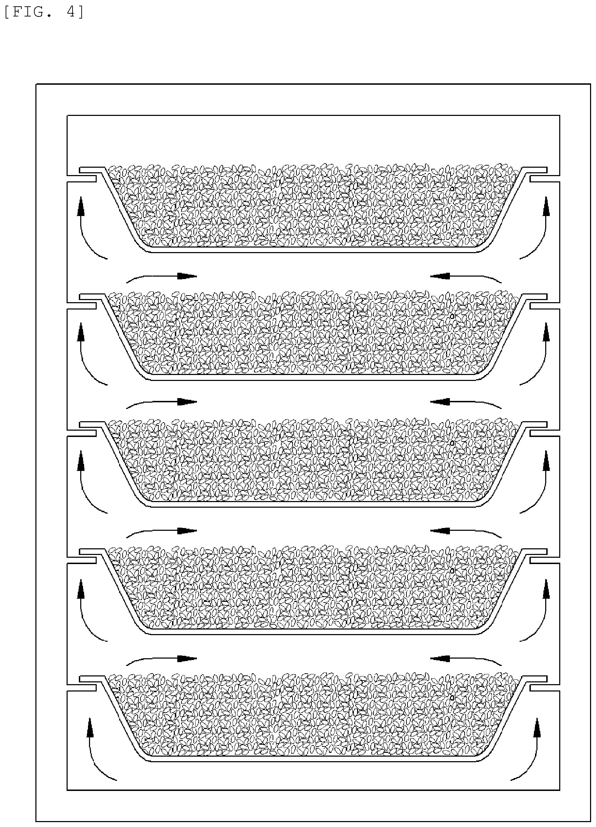

After the germination step S120, the germinated brown rice, brown glutinous rice, black rice or a grain mixture thereof with germs in a size of 0.2-0.5 mm is put into a steamer at a uniform thickness as shown in FIG. 4, followed by the cooking step S130 wherein the brown rice, brown glutinous rice, black rice or a grain mixture thereof is uniformly exposed to steam for 1 to 3 hours so that the rice is thoroughly steam-boiled.

The whole grain provides the most suitable energy (sugar) to the human body, and the sugar is converted into the energy required for the human body only if carbohydrates (starch) undergo assimilation in the body.

In this regard, a carbohydrate crystal state of raw (reproductive) grains has a molecular crystal structure in which human digestive juices (organs) may not assimilate well, and such carbohydrates (starch) in the above state are said to be in the "beta state".

When raw rice flour is kneaded and pressed with a frying machine to prepare over-cooked (scorched) rice, it is difficult to digest the scorched rice, which in turn sometimes makes the stomach sore. This is due to poor digestion in the digestive organs.

The beta state starch may be easily assimilated (digested) into the digestive juices of the human body by breaking down each bonding molecular structure in the process of boiling, steaming or roasting, that is, by changing the starch into the alpha state, thereby being converted into required sugar and supplying energy.

Therefore, the carbohydrate molecular crystal state of the whole grain is alpha-converted through the cooking step S130, thereby facilitating digestion.

In the cooking step S130, it is preferable to stir the rice several times while adding water during cooking. This is because brown glutinous rice requires more water than other whole grains during cooking.

When cooking for less than 1 hour in the cooking step S130, the brown rice, brown glutinous rice, black rice or a grain mixture thereof may be partially less boiled. On the other hand, if exceeding 3 hours, the grain is softened too much and does not maintain the original shape thereof. Therefore, steam-cooking is preferably performed for 1 to 3 hours.

On the other hand, although it was described that the cooking step S130 is carried out using steam, cooking may also be performed in a pressure cooker, that is, an autoclave.

The cooking method using an autoclave may be classified into the following two methods.

A first cooking method may include directly washing and cooking brown rice, brown glutinous rice, black rice or a grain mixture thereof without soaking after germination stage S120.

After putting the brown rice, brown glutinous rice, black rice or a grain mixture thereof into the autoclave, water may be added to an extent at which the rice is barely submerged in water, followed by cooking. When an autoclave cock starts to move while discharging steam from the same, about 5 minutes should be allowed to remove all of the steam instead of immediately turning off the heat. At this time, the whole grain may be easily separated into grains in a drying step S140 described later, however, a carbonized layer does not easily burst when roasting in a carbonized layer formation step S160.

Further, a second cooking method may include putting brown glutinous rice, black rice or a grain mixture thereof into an autoclave and adding water to an extent at which the rice is submerged in water at a depth of about 1 cm, followed by cooking. When an autoclave cock starts to move while discharging steam from the same, about 5 minutes should be allowed to remove all of the steam instead of immediately turning off the heat. At this time, the whole grain is not easily separated into grains in a drying step S140 described later, however, a carbonized layer may very easily burst when roasting in a carbonized layer formation step S160.

The brown rice, brown glutinous rice, black rice or a grain mixture thereof obtained after the cooking step S130, is subjected to a drying step S140 in a dryer at 28 to 32 °C for 7 to 8 hours.

In case of drying in the dryer for less than 7 hours, the rice is not properly dried and does not have good taste and flavor after roasting. In addition, the carbonized layer is not formed well on the surface of the brown rice, brown rice glutinous rice, black rice or a grain mixture thereof in the following carbonized layer formation step S160. On the other hand, if drying for more than 8 hours, the texture is too hard and cracks may occur on the surface thereof due to over-drying. Therefore, the drying is preferably conducted at 28 to 32 °C for 7 to 8 hours.

A separation and screening step may be further conducted wherein the brown rice, brown glutinous rice, black rice or a grain mixture thereof obtained after the drying step S140 is separated into grains and the crushed whole grains are selectively removed.

It is desirable to use an additional device to easily separate agglomerated grains. Using a small mortar and pestle on a flat surface may separate the agglomerated grains.

In this process, the small granules of the crumbled grains are typically not roasted well, preferably being sieved and separated instead.

By repeating the cooking step S130 and the drying step S140 3 to 5 times, that is, repeating operations of steaming and drying, efficiency of Manna in the subsequent process, that is, the carbonized layer formation step S160, is maximized and, when a patient ingests the same, faster therapeutic effects can be achieved.

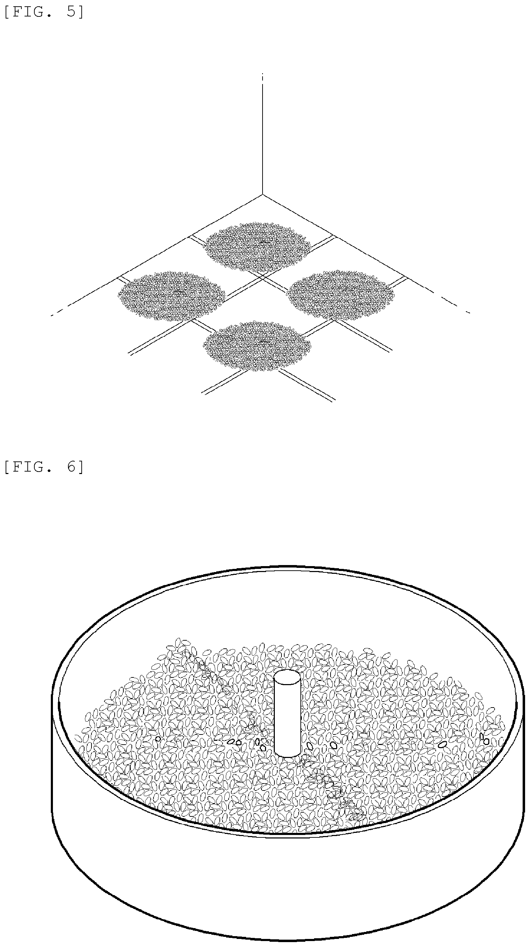

As shown in FIG. 5, the brown rice, brown glutinous rice, black rice or a grain mixture thereof obtained after the drying step S140 is subjected to an aging step S150 to age the rice in a loess room for 2 to 3 days.

The brown rice, brown glutinous rice, black rice or a grain mixture obtained after the drying step S140 is transported to the loess room while spreading the same evenly to a thickness of about 5 cm.

The aging through a far-infrared radiation emitting material may retain the original taste of each of whole grains while eliminating the smell of the brown rice, brown glutinous rice, black rice or a grain mixture thereof. Moreover, due to strong detoxification, the taste may become softer, thereby producing Manna which is a good food for the human body.

The loess room refers to a space enclosed by a wall surface which is mostly covered or finished with red clay, and may be a facility wherein hot water is supplied through a pipeline to heat the bottom of the loess room by installing a boiler on the outside of the loess room, so as to raise an indoor temperature while emitting a great amount of far-infrared rays from the red clay, that is, loess.

Loess has a characteristic of emitting far-infrared rays. The aging is preferably conducted in a loess room emitting far-infrared rays at a wavelength of 25 to 50 µm.

At this time, in order to maximize aging effects, it is preferable to maintain the indoor temperature of the loess room in the range of 40 to 42 °C and the humidity in the range of 30 to 50%.

In the following examples, the drying or aging step may be conducted under the same conditions as above.

When the temperature is kept below 40 °C, sufficient far-infrared irradiation and aging are not achieved. If the temperature is maintained above 42 °C, physical properties of the product may be modified.

Meanwhile, when the humidity is less than 30%, the rice may be excessively dried and thus under cracking. If the humidity is 50% or more, the drying is not desirably performed. Therefore, the humidity is preferably maintained in the range of 30 to 50%.

During aging S150 in the loess room, a process of spraying salt water on the brown rice, brown glutinous rice, black rice or a grain mixture thereof under aging and then drying the rice along with aging is preferably repeated 3 to 5 times.

During spraying the salt water on the brown rice, brown glutinous rice, black rice or a grain mixture thereof under aging and then drying the same, a hard structure of the grains may be softened to thus have better texture. Further, moisture is evenly distributed inside the grains and aids in absorption of the grains by the human body.

Further, as shown in FIG. 6, a carbonized layer formation step S160 may be performed to form a carbonized layer at the outermost portion of the whole grain by: roasting the rice without oil using a roasting device such as a drum, a stir-frying pot or pan; otherwise, gradually introducing the brown rice, brown glutinous rice or a grain mixture thereof in a slightly wet state into a popping machine and then popping the same to turn yellow.

The carbonized layer is preferably formed with a thickness of 10 to 30 µm depending on species of the whole grains. While the whole grain is roasted through the carbonized layer formation step S160, the carbonized layer formed on the bran portion of the whole grain starts to finely crack. It is preferable to further roast the grains until the carbonized layer bursts.

In other words, the whole grain is firstly stir-fried with strong heat and then with weak heat like as steaming for a while and turning yellow to thus roast the same until the husks of the grains burst.

However, in case of manufacturing whole grain for the elderly who have weak teeth, the carbonized layer is formed by slightly stir-frying the grain with weak heat to prevent the bran of the grain from bursting.

Alternatively, whole grains may be soaked in water for 1 day and taken out of the water, followed by roasting the grains with very weak heat for a long time.

In the carbonized layer formation step S160, roasting is carried out at a temperature of 200 to 220 °C for 10 to 15 minutes. When roasting at a temperature of less than 200 °C or for less than 10 minutes, the carbonized layer is not sufficiently formed. When roasting at a temperature of more than 220 °C or for more than 15 minutes, nutrient-rich husks are carbonized too thickly, deteriorating taste. Therefore, it is preferable to roast the grain at a temperature of 200 to 220 °C for 10 to 15 minutes.

When the grain is fried in a frying pot or pan, the brown rice, brown glutinous rice or a grain mixture thereof obtained after the cooking step S130 is put into a plastic container and placed in a freezer for 1 week to sufficiently freeze the same, followed by frying frozen grains using the frying pot or pan through the drying step S140. As a result, the prepared product may have a soft texture without hardness when eaten. Frying by a frying machine may also be the same as described above.

Without going through the above steps, if raw crops in a beta state are simply roasted with strong heat, the beta state of starch becomes fixed and is not assimilated in the human digestive organs. In some cases, the processed grains may be decayed by activity of saprogenic microorganisms to thus cause stomachache or may be directly excreted without digestion.

In order to solve this problem, it is possible to produce a food which can easily dissimilate (be digested) by steam-drying whole grain and then roasting the same with strong heat to form a carbonized layer.

When the brown rice, brown glutinous rice, black rice or a grain mixture thereof is roasted in the carbonized layer formation step S160, the bran portion composed of a fibrous material undergoes carbonization to form a carbonized layer of charcoal in which numerous pores are formed. Herein, the carbonized layer includes potassium carbonate (K₂CO₃) and, during roasting of the brown rice, brown glutinous rice or a grain mixture thereof, the bran may finely crack. As a result, when the brown rice, brown glutinous rice, black rice or a grain mixture thereof is ingested and chewed, the bran may be broken and potassium carbide generated by carbonization of the bran may dissolve and various nutrients contained in the fibrous material of the bran can be sufficiently extracted and in turn can be easily absorbed in the human body so that diverse nutrients such as various beneficial vitamins and minerals contained in the fibrous material of the bran may be uniformly ingested.

Further, roasted and processed grains have a very low water content and saliva is mixed when chewing, thereby ensuring more complete digestion.

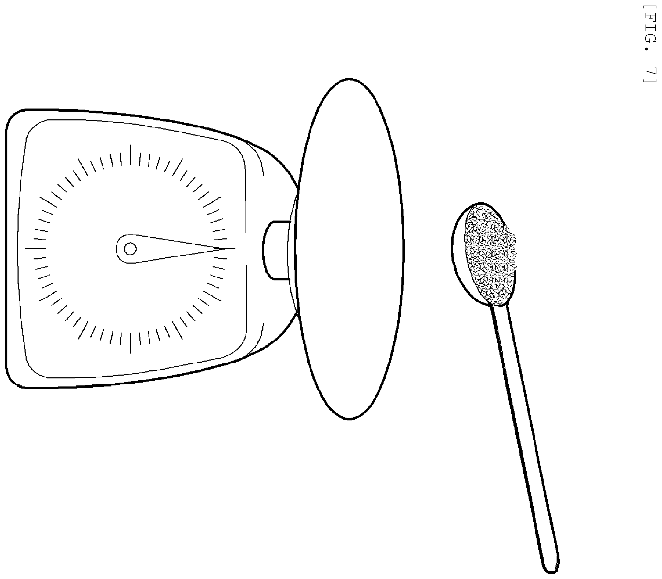

Then, a storage step S170 including cooling the brown rice, brown glutinous rice, black rice or a grain mixture thereof obtained after the carbonized layer formation step S160, and storing the cooled rice in a sealed container is conducted. Whole grains such as whole adlay, whole oat, corn, black rice and beans may be roasted and processed, respectively, and the roasted and processed whole grains may be admixed in desired amounts to manufacture Manna as shown in FIG. 7.

The storage step S170 may include cooling the roasted grains to maximize savory taste and flavor, and storing the same in a sealed container to protect the grains from being spoiled, so that the grains can be easily ingested while being stored for a long time.

### How to make Manna with soybeans

As beans for manufacturing Manna, soybeans or black beans are used.

Soybean is a yellow bean used to make a soybean paste brick ("meju"), and contains different active ingredients such as lecithin, saponin, isoflavone, trypsin inhibiter, etc. to exhibit anticancer effects, decreases cholesterol, inhibits fat synthesis to prevent obesity, and may activate bowel movement to facilitate defecation, which is effective for constipation.

The black bean is a bean with black grain husks which contain more anti-aging ingredients as compared to typical beans, and is effective in preventing adult diseases and diet.

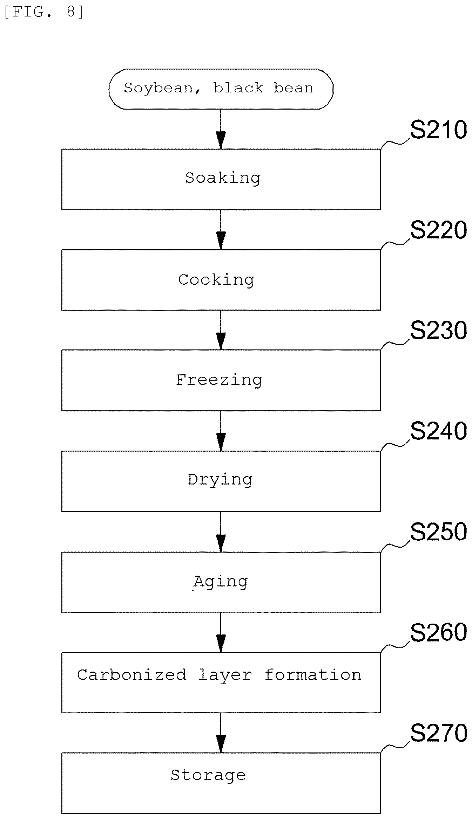

As shown in FIG. 8, a method for manufacturing Manna using beans may include soaking S210, cooking S220, freezing S230, drying S240, aging S250, carbonized layer formation S260 and storage S270.

Black beans and soybeans are washed respectively, followed by a soaking step S210 of soaking for 2-3 hours.

The beans subjected to the above-mentioned soaking step S210 are kept in the form of beans while absorbing a predetermined amount of moisture so that the beans have a water content of 25 to 35%.

If the water content is less than 25%, the beans are not evenly boiled throughout in a subsequent carbonized layer formation step S250. On the other hand, if the water content exceeds 35%, the beans are softened too much and the shape collapses during processing. Therefore, it is preferable to maintain the water content of beans in the range of 25 to 35%.

The beans obtained after the soaking step S210 are subjected to a cooking step S220 wherein the beans are put into a steamer and the bean grains are uniformly exposed to steam for 40 to 50 minutes.

In the cooking step S210, the soybeans or black beans are put into the steamer at a uniform thickness, and then steamed and cooked for a certain period of time so that an amount of steam applied to the bean grains is uniformly maintained to boil the soybeans or black beans evenly throughout.

If the beans are steamed for less than 40 minutes, a portion of the beans (center portion) is less boiled. On the other hand, when the cooking time exceeds 50 minutes, the bean grains are softened too much and could not maintain the original shape thereof. Therefore, the cooking time preferably ranges from 40 to 50 minutes.

In case of cooking using a pressure cooker (autoclave) or pot, the cooking time may be slightly shortened.

The beans are exposed to steam for 40 to 50 minutes to cook the same in the cooking step S220, and then, preferably steamed thoroughly for a further 5 to 15 minutes. As such, steaming the cooked beans thoroughly may allow the beans to be boiled evenly throughout.

If the steaming time is short, the beans may become crumbly. On the other hand, when the steaming time is too long, the beans may be over-boiled. Therefore, the steaming is preferably carried out for 5 to 15 minutes.

Following this, a freezing step S230 may be performed by cooling the cooked beans after the cooking step S220, putting the beans into a bag or a sealed container, and then, freezing the same in a freezer for 2 to 3 days.

The freezing step S230 is an aging process to soften the soybeans or black beans, so as to improve texture thereof. However, the above freezing step S230 may be omitted.

When the bean is frozen, a protein digestion inhibitor enzyme called "protease" is destroyed, thereby facilitating digestion. In addition, the flavor may be improved through the freezing process and the soybeans or black beans do not agglomerate, which makes the subsequent process much easier. Then, a drying step S240 is performed by thawing the frozen grains and drying the beans.

The frozen soybeans or black beans are moved to a drying rack and spread evenly, followed by thawing and drying the same.

Thereafter, an aging step S250 is performed by transporting the dried soybeans or black beans to a loess room and aging the same for 2 to 3 days. The aging step S250 is substantially the same as the aging step S150 of the brown rice and brown glutinous rice, and a detailed description thereof will be omitted.

After aging is completed, a carbonized layer formation step S260 may be performed.

After roasting the soybeans or black beans with strong heat in a drum, a frying pot or a pan type frying device without oil, the product is steamed while lowering the heat to roast the same in such a manner that the beans turn yellow while being steamed thoroughly, thereby boiling the beans evenly throughout. As a result, the roasted beans become crispy.

A carbonized layer formation step S260 for beans is substantially the same as the carbonized layer formation step S160 for brown glutinous rice, and a detailed description thereof will be omitted.

The soybeans or black beans obtained after the carbonized layer formation step S260 are cooled, and then, a storage step S270 to store the cooled beans in a sealed container is performed.

The roasted soybeans or black beans are cooled to maximize savory taste and flavor and, in order to prevent the beans from collapsing, the beans are put in a sealed container so that the beans can be easily ingested while being stored for a long time.

### How to make Manna using whole wheat and whole wheat

Whole barley may contain a large amount of tocotrienol to inhibit the synthesis of cholesterol. Nutrients such as calcium, fiber and B vitamins are much more contained than rice, which enhances skin elasticity. Further, a large amount of potassium contained in the whole barley may help to maintain blood pressure at a normal level and strengthen intestines. In addition, the whole barley contains dietary fiber effective for constipation in 10 times the amount in rice, which facilitates the intestines to move more smoothly and helps smooth digestion.

Whole wheat contains a large amount of fiber and may be beneficial for preventing constipation, hemorrhoids and cancer. Further, lipid polysaccharides contained in the whole wheat may enhance immunity, while glutamine peptides can promote activity of the digestive tract.

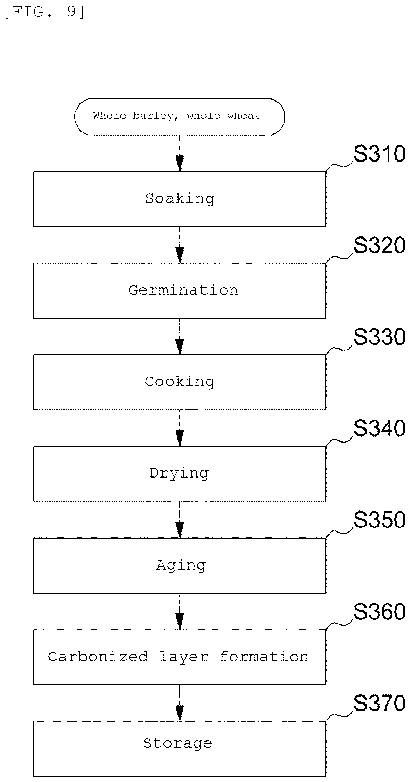

As shown in FIG. 9, a method for manufacturing Manna using whole barley and whole wheat may include soaking S310, germination S320, cooking S330, drying S340, aging S350, carbonized layer formation S360 and storage S370.

After washing whole barley, whole wheat or a mixture thereof with clean water, a soaking step S310 of soaking the washed grains for 1 day or 2 to 3 days is performed.

Since the whole barley and whole wheat has thicker husks than brown rice, these are sufficiently soaked for a longer time such as 1 day or 2 to 3 days in the soaking step S310, as compared to the brown rice. Through the soaking step S310, the whole barley or whole wheat may maintain the original shape thereof while absorbing moisture.

The whole barley and whole wheat obtained after the soaking step S310 may be subjected to the germination step S320, the cooking step S330, the drying step S340, the aging step S350, the carbonized layer formation step S360 and the storage step S370. In this regard, these steps are substantially the same as the above-mentioned method for manufacturing the brown rice or brown glutinous rice, and a detailed description thereof will be omitted.

### How to make Manna using corn

Corn is a perennial plant belonging to the genus *Picea,* contains a zein peptide to decrease blood pressure, and is effective for promoting digestion and improving constipation, diabetes and arteriosclerosis.

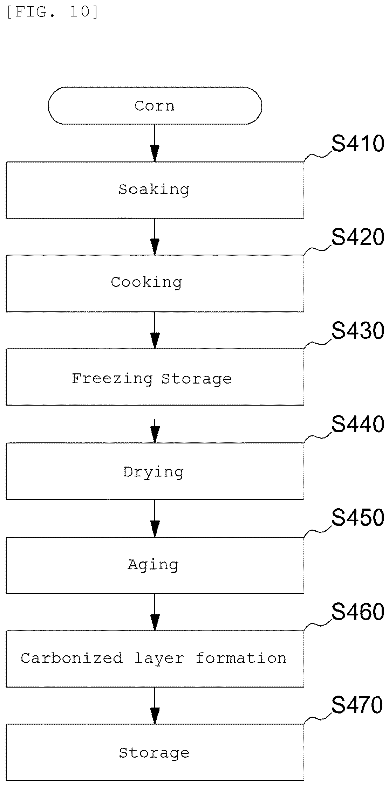

As shown in FIG. 10, a method for manufacturing Manna using corn may include soaking S410, cooking S420, freezing S430, drying S440, aging S450, carbonized layer formation S460 and storage S470.

After washing dried corn with clean water, a soaking step S410 to soak the washed corn with hot water for 1 day is performed. The corn obtained after the soaking step S410 may maintain the original shape of the grain while absorbing moisture.

The corn obtained after the soaking step S410 is subjected to a cooking step S420 wherein the corn is put in an autoclave or a steamer and boiled for 1 hour. Herein, the corn is boiled with strong heat while adding enough water to pop out corn kernels.

Since the corn kernels fill with sufficient moisture through the above soaking step S410, a corn tissue may be gradually changed by the heat so that the corn kernels can retain the original shape thereof while being boiled in a proper state for ingestion. Therefore, even if the product undergoes a further process, that is, the carbonized layer formation step S450, inner and outer tissues of the corn are not significantly damaged while maintaining the original shape of corn. Therefore, nutrients contained in the corn can be ingested as they are.

When all corn kernels are completely boiled, it is preferable to turn off the heat and steam thoroughly for enough time (6 to 8 hours). Steaming thoroughly is for boiling the corn evenly, which in turn is properly cooked. The corn that has undergone the cooking step S420 along with thorough steaming is spread evenly at room temperature and cooled, followed by a freezing step S430 to put the cooled corn in a bag or a sealed container and then freeze the same in a freezer for 2 to 3 days.

Thereafter, the frozen corn is transferred to a drying rack and thawed at room temperature, followed by a drying step S440 to dry the corn. At this time, the drying step S440 is conducted to an extent at which the surface of the corn kernels is slightly hardened.

However, the freezing step S430 may be omitted. Alternatively, a drying step S440 may be performed immediately after cooling through the cooking step S420. Thereafter, the dried corn is transported to a loess room, followed by an aging step S450 to age the product for 2 to 3 days. The aging step S450 is substantially the same as the aging step S150 of the brown rice and brown glutinous rice, and therefore, a detailed description thereof will be omitted.

The corn obtained after the aging step S450 is subjected to a carbonized layer formation step S460 when the corn is moistened to a certain extent.

Since corn has a thick husk, the corn may be firstly stir-fried with strong heat and then roasted with weak heat after lowering the heat.

Since the moisture is soaked evenly in the corn, the corn may be firstly stir-fried with strong heat and then roasted with weak heat while gradually lowering the heat, thereby removing moisture.

The corn carbonized layer formation step S460 is substantially the same as the carbonized layer formation step S250 in a method for manufacturing Manna using soybeans or black beans, and therefore, a detailed description thereof will be omitted.

A storage step S470 is performed by cooling the evenly roasted corn through the carbonized layer formation step S460, and then storing the cooled product in a sealed container. As a result, the roasted corn is cooled to maximize savory flavor and aroma, so that the product can be easily ingested while being stored for a long time.

As described above, the roasted and processed brown rice, brown glutinous rice, black beans, soybeans, black beans, whole barley, whole wheat and corn according to the alternative processes are blended at predetermined ratios thereof, as shown in FIG. 7, thereby manufacturing a cereal of whole grain mixtures, that is, Manna.

The technical idea of the present invention has been described with reference to the above embodiments.

It will be apparent to those skilled in the art that various alterations and modifications may be made to the embodiments described above from the description of the present invention.

Further, although not explicitly shown or described, it will also be apparent that those skilled in the art can make various modifications including the technical idea of the present invention from the description of the present invention which is still within the scope of the present invention.

The above embodiments described with reference to the accompanying drawings have been described for the purpose of illustrating the present invention, and the scope of the present invention is not limited to these embodiments.

## Claims

1. A method for manufacturing roasted whole grain cereal, comprising:
soaking brown rice, brown glutinous rice, black rice or a grain mixture thereof in a whole grain state in salt water so as to reach a water content of 25 to 35%;
after soaking, germinating the grain to generate germ in a size of 0.2 to 0.5 mm;
heating and cooking the germinated whole grain;
dividing the agglomerated whole grain into kernels, and screening and removing the crushed whole grains;
drying the cooked whole grain in a dryer at a temperature of 28 to 32 °C for 7 to 8 hours;
aging the dried whole grain in a loess room;
roasting the aged whole grain at a temperature of 200 to 220 °C for 10 to 15 minutes without oil or additives to form a carbonized layer having a predetermined thickness on the outermost portion of the whole grain; and
storing the roasted grain in a sealed container.

2. A method for manufacturing roasted whole grain cereal, comprising:
soaking whole barley, whole wheat or a mixture thereof in a whole grain state for 2 to 3 days;
after soaking, germinating the grain to generate germ in a size of 0.2 to 0.5 mm;
heating and cooking the germinated whole grain;
drying the cooked whole grain in a dryer at a temperature of 28 to 32 °C for 7 to 8 hours;
aging the dried whole grain in a loess room;
roasting the aged whole grain at a temperature of 200 to 220 °C for 10 to 15 minutes without oil and additives to form a carbonized layer on the outermost portion of the whole grain; and
storing the roasted grain in a sealed container.

3. The method according to claim 1 or 2, wherein the whole grain aged in the aging step is subjected to a process of spraying salt water over the whole grain and drying the same and this process is repeated 3 to 5 times.

4. The method according to claim 1 or 2, wherein the cooking step is conducted while heating the whole grain with steam for 1 to 3 hours.

5. The method according to claim 1 or 2, wherein the carbonized layer formation step is conducted to form a carbonized layer having a thickness of 10 to 30 µm on the surface of the whole grain.

6. The method according to claim 1 or 2, wherein the cooking step and the drying step are repeated 3 to 5 times.

7. The method according to claim 1 or 2, wherein, when a popping machine or a frying pot is used as a roasting device in the carbonized layer formation step, the whole grain obtained after the cooking step is firstly frozen and then subjected to the drying step, followed by frying the whole grain.

8. A method for manufacturing roasted whole grain cereal, comprising:
soaking soybean, black bean or a mixture thereof in a whole grain state so as to reach a water content of 25 to 35%;
after soaking, heating the whole grain with steam for 40 to 50 minutes, cooking and then steaming the same thoroughly for 5 to 15 minutes;
freezing the cooked whole grain in a freezer;
drying the frozen whole grain in a dryer at a temperature of 28 to 32 °C for 7 to 8 hours;
aging the dried whole grain in a loess room;
roasting the aged whole grain without oil and additives to form a carbonized layer on the outermost portion of the whole grain; and
storing the roasted grain in a sealed container.

9. A method for manufacturing roasted whole grain cereal, comprising:
soaking dried corn for 1 day;
after soaking, cooking the soaked corn in a pressure cooker (autoclave) or a steamer for 1 hour;
freezing the cooked corn in a freezer;
drying the frozen corn in a dryer;
aging the dried corn in a loess room;
roasting the dried and aged corn with strong heat and then weak heat to form a carbonized layer on the outermost portion of the corn; and
storing the roasted corn in a sealed container.

10. The method according to claim 9, wherein, after the cooking step, the flame is turned off, followed by steaming the cooked corn thoroughly for 6 to 8 hours.

11. Roasted whole grain cereal manufactured by the method according to any one of claims 1 to 9, wherein the cereal includes different grains blended together at predetermined ratios.
